# EUROPÄISCHE PATENTSCHRIFT

(11) **EP 3 299 611 B1**
(45) Veröffentlichungstag und Bekanntmachung des Hinweises auf die Patenterteilung: **14.08.2019**
(21) Anmeldenummer: 17193215.5
(22) Anmeldetag: 26.09.2017
(51) Int. Cl.: F03B 3/04, F03B 11/00, F03B 13/08

(54) **NIEDERDRUCK-WASSERKRAFTWERK MIT EINER EJEKTORRAMPE FÜR EINEN ÜBERWASSERSTRAHL**
LOW PRESSURE HYDROELECTRIC POWER PLANT WITH AN EJECTOR RAMP FOR A SURPLUS WATER JET
CENTRALE HYDROÉLECTRIQUE À BASSE PRESSION POURVUE D'UNE POMPE À ÉJECTEUR POUR UN JET D'EAU

(30) Priorität: 27.09.2016 AT 508592016
(43) Veröffentlichungstag der Anmeldung: 28.03.2018
(73) Patentinhaber: ZT-Fritsch GmbH, 4400 Steyr (AT)
(72) Erfinder: Fritsch, Rudolf, 4484 Kronstorf (AT)
(74) Vertreter: Patentanwaltskanzlei Hübscher

(56) Entgegenhaltungen:
- WO-A1-02/081905
- Rudolf Fritsch ET AL: "Ejektorwirkung bei Überwasser mit Vertikaler Kaplan-Turbine", WasserWirtschaft, 31. Oktober 2015 (2015-10-31), XP055447561, Gefunden im Internet: URL:https://www.researchgate.net/profile/J uergen_Schiffer/publication/284498634_Ejek torwirkung_bei_Uberwasser_mit_Vertikaler_K aplan-Turbine/links/5654286408aefe619b19aa c4/Ejektorwirkung-bei-Ueberwasser-mit-Vert ikaler-Kaplan-Turbine.pdf [gefunden am 2018-02-05]
- Sabri Deniz ET AL: "Saugrohre bei Flusskraftwerken", , 31. Oktober 2015 (2015-10-31), XP055446328, Gefunden im Internet: URL:https://www.ethz.ch/content/dam/ethz/s pecial-interest/baug/vaw/vaw-dam/documents /das-institut/mitteilungen/1990-1999/106.p df

## Beschreibung

### Technisches Gebiet

Die Erfindung bezieht sich auf ein Niederdruck-Wasserkraftwerk mit einer Ejektorrampe für einen Überwasserstrahl, mit einem an eine Turbine angeschlossenen Saugrohr und mit einer Vereinigungsstrecke für den von der Ejektorrampe abströmenden Überwasserstrahl mit dem unterhalb des Überwasserstrahls aus dem Saugrohr ausströmenden Triebwasser.

### Stand der Technik

Bei Wasserkraftanlagen im Niederdruckbereich reduziert ein Anstieg des Unterwasserpegels sowohl die Fallhöhe als auch den Turbinendurchfluss, was sich insbesondere bei Überwasser bemerkbar macht, das den Gesamtabfluss vergrößert und damit zu einem Anstieg des Unterwasserpegels führt. Um diesem negativen Einfluss entgegenwirken und das Überwasser zur Energiegewinnung nützen zu können, wurde bereits vorgeschlagen (Fritsch, R. et al.: Ejektorwirkung bei Überwasser mit Vertikaler Kaplan-Turbine, WasserWirtschaft 10/2015, S. 32-35; Schiffer, J. et al.: Experimentelle Untersuchung der Ejektorwirkung bei vertikalen Kaplan-Turbinen, WasserWirtschaft 5/2015, S. 33-39;) das Überwasser entlang einer Ejektorrampe zu beschleunigen, die über dem Saugrohrausauslauf endet, sodass sich der beschleunigte Überwasserstrahl mit dem Triebwasser vereinigt. Aufgrund des dabei entstehenden Impulses stellt sich ein Fallhöhengewinn durch Verdrängung des Unterwassers ein. Außerdem wird durch die Ejektorwirkung und auch durch die geänderte Fallhöhe selbst der Turbinendurchfluss gesteigert, was zu einer Leistungssteigerung bei Überwasser führt. In Abhängigkeit vom Anfall des Überwassers kann es jedoch im Anschluss an den Saugrohrauslauf vor dem Wechselsprung mit Ausbildung einer Deckwalze zu einer Einschnürung des Gesamtabflusses mit der Wirkung kommen, dass die damit verbundene Durchflussbehinderung zu einer Verringerung der durch die Ejektorwirkung des Überwasserstrahls bedingten Leistungssteigerung führt.

### Darstellung der Erfindung

Der Erfindung liegt somit die Aufgabe zugrunde, ein Niederdruck-Wasserkraftwerk mit einer Ejektorrampe für einen Überwasserstrahl so auszugestalten, dass die Ejektorwirkung des Überwassers auch bei höheren Überwasserraten vorteilhaft genützt werden kann.

Ausgehend von einem Niederdruck-Wasserkraftwerk der eingangs geschilderten Art löst die Erfindung die gestellte Aufgabe dadurch, dass die Vereinigungsstrecke eine Sohle aufweist, die im Anschluss an den Austritt des Saugrohrs in Strömungsrichtung eine sich über die Sohlenbreite erstreckende Vertiefung bildet.

Durch die Vertiefung der Sohle der Vereinigungsstrecke wird die Sohle an die Richtung des Ejektorimpulses mit der Wirkung angepasst, dass eine Einschnürung des Gesamtabflusses vor dem Wechselsprung zwischen dem Schießen und dem Strömen unterbunden und damit die durch die Einschnürung bedingte Durchflussbehinderung vermieden wird, was eine bessere Ausnützung der Ejektorwirkung des Überwasserstrahls erlaubt und damit eine Leistungssteigerung mit sich bringt. So konnte beispielsweise im Modellversuch bei einem der doppelten Triebwassermenge entsprechenden Überwassermenge mithilfe einer erfindungsgemäßen Sohleausbildung im Bereich der Vereinigungsstrecke eine Leistungssteigerung aufgrund der Ejektorwirkung von 17 % auf 22 % ermittelt werden. Die Form und Bemaßung der Vertiefung ist vor allem von der Höhe der Saugrohraustrittsöffnung und der Neigung der Ejektorrampe abhängig.

Um die Ejektorwirkung zusätzlich zu verbessern, kann der Ejektorrampe ein der Höhe nach verstellbares, einen Durchtritt für den Überwasserstrahl freigebendes Schütz vorgeordnet werden, dessen unterer den Durchtritt begrenzender Abschnitt eine stetige Leitfläche zur laminaren Strömungsumlenkung bildet. Zufolge dieser Maßnahme weist der Durchtritt zwischen dem Schütz und der Schwelle des durch das Schütz gebildeten Wehrs eine Düsenform mit einer Venturiwirkung auf, die einerseits die Abströmungsverluste verringert und anderseits die Strömungsgeschwindigkeit auf der Austrittseite des Durchtritts und damit den Ejektorimpuls im Bereich der Vereinigung von Triebwasser und Überwasser und damit die Impulskraft um ca. 5 % erhöht, was sich wiederum positiv auf die Leistungssteigerung auswirkt.

Besonders einfache Konstruktionsverhältnisse ergeben sich in diesem Zusammenhang, wenn der die stetige Leitfläche bildende Abschnitt des Schützes aus einem kreiszylindrischen Wandabschnitt und einem davon in Strömungsrichtung tangential abfallenden Wandabschnitt zusammengesetzt ist, weil in diesem Fall herkömmliche Schütztafeln in einfacher Art durch das Vorsetzen eines entsprechenden kreiszylindrischen Wandabschnitts und das Anordnen eines ebenen Wandabschnitts umgerüstet werden können, der tangential an den kreiszylindrischen Wandabschnitt anschließt und die Unterkante der Schütztafel untergreift.

### Kurze Beschreibung der Zeichnung

In der Zeichnung ist der Erfindungsgegenstand beispielsweise dargestellt. Es zeigen
- Fig. 1: ein erfindungsgemäßes Niederdruck-Wasserkraftwerk in einer zum Teil aufgerissenen schematischen Draufsicht,
- Fig. 2: dieses Niederdruck-Wasserkraftwerk in einem schematischen Schnitt nach der Linie II-II der Fig. 1 und
- Fig. 3: einen vertikalen Schnitt durch das den Durchtritt zur Ejektorrampe freigebenden Schütz in einem größeren Maßstab.

### Weg zur Ausführung der Erfindung

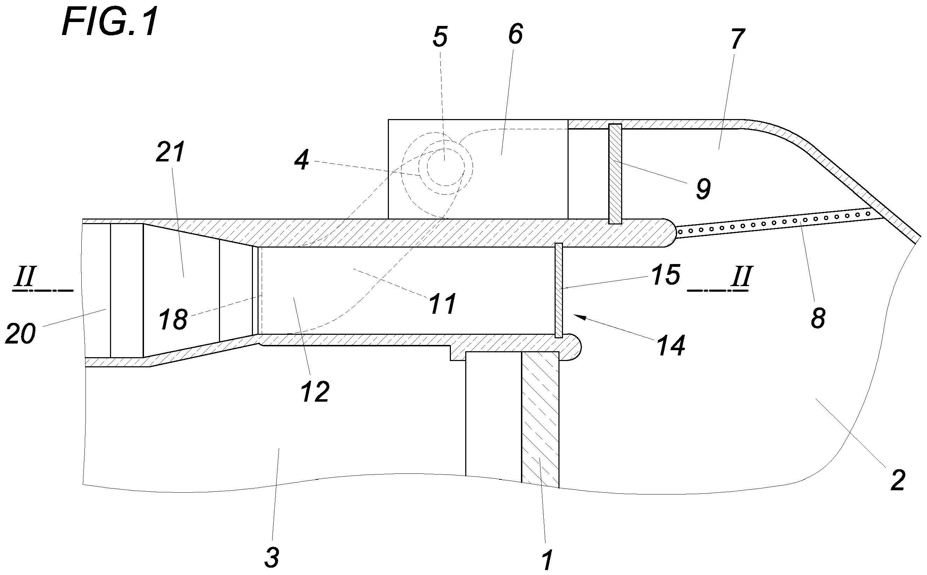

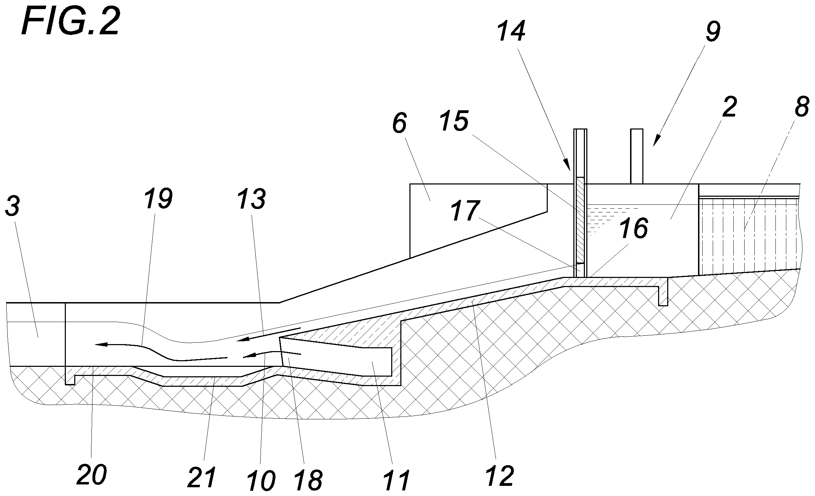

Ein erfindungsgemäßes Niederdruck-Wasserkraftwerk umfasst nach den Fig. 1 und 2 ein Stauwehr 1 zwischen dem Oberwasser 2 und dem Unterwasser 3. Mithilfe des Oberwassers 2 wird eine Kaplanturbine 4 beaufschlagt, die mit dem von ihr angetriebenen Generator 5 in einem Maschinengehäuse 6 untergebracht ist. Im Einlauf 7 für die Kaplanturbine 4, dem ein Einlaufrechen 8 vorgelagert ist, ist ein Einlaufschütz 9 angeordnet. Das an die Kaplanturbine 4 angeschlossene Saugrohr für das Triebwasser 10 ist mit 11 bezeichnet. Zwischen dem Maschinengehäuse 6 und dem Stauwehr 1 befindet sich eine Ejektorrampe 12 für Überwasser. Das sich auf der Ejektorrampe 12 zu einem Überwasserstrahl 13 beschleunigende Überwasser wird durch ein der Ejektorrampe 12 vorgelagertes Schütz 14 gesteuert, das zwischen dem unteren Rand der Schütztafel 15 und der Schwelle 16 des durch das Schütz 14 gebildeten Wehrs einen Durchtritt 17 für das Überwasser freilässt.

Wie der Fig. 1 entnommen werden kann, verläuft der Saugkanal 11 in einer Draufsicht unter einem spitzen Winkel zur Längsrichtung der Ejektorrampe 12, um dann parallel zur Ejektorrampe 12 unterhalb von dieser zu münden. In der Draufsicht nach Fig. 1 stimmt somit die Richtung des aus dem Austritt 18 des Saugrohrs 11 austretenden Triebwassers 10 mit der Richtung des die Ejektorrampe 12 verlassenden Überwasserstrahls 13 zusammen. Der Überwasserstrahl 13 vereinigt sich somit mit dem Triebwasser 10 zum Gesamtabfluss 19.

Damit bei höheren Anteilen an Überwasser eine Einschnürung des Gesamtabflusses 19 vor einem eine Deckwalze ausbildenden Wechselsprung unterbunden werden kann, ist die Sohle 20 des Unterwassers 3 im Anschlussbereich an das Saugrohr 11 bzw. die Ejektorrampe 12 mit einer Vertiefung 21 versehen, die sich mit einem entsprechenden Abstand vom Austritt 18 des Saugrohrs 11 entlang der Vereinigungsstrecke für den Überwasserstrahl 13 mit dem Triebwasser 10 über die Sohlenbreite erstreckt, sodass die Sohle 20 im Bereich der Vertiefung 21 einen die Richtung des Ejektorimpulses berücksichtigenden Verlauf einnimmt, was die Strömungsverluste verringert und damit zu einer besseren Ausnützung der Ejektorwirkung führt.

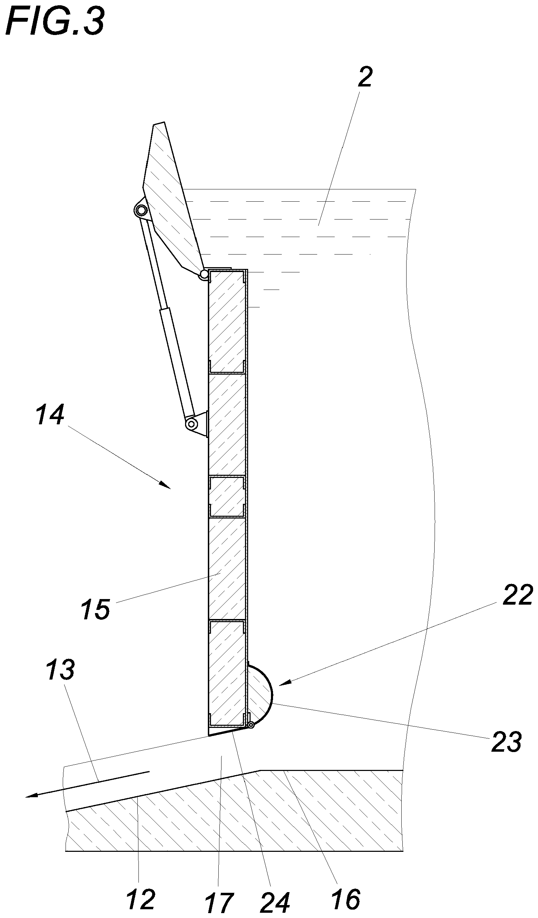

Die Ejektorwirkung hängt von der Geschwindigkeit des von der Ejektorrampe 12 abschießenden Überwasserstrahls 13 und damit von der Einlaufgeschwindigkeit des Überwassers auf die Ejektorrampe 12 ab. Aus diesem Grund empfiehlt es sich, den Durchtritt 17 zwischen der Schütztafel 15 und der Schwelle 16 des durch das Schütz 14 gebildeten Wehrs nach Art einer Venturidüse zu gestalten. Dies gelingt mit einfachen konstruktiven Mitteln gemäß der Fig. 3 dadurch, dass der den Durchtritt 17 begrenzende, untere Abschnitt der Schütztafel 15 eine stetige Leitfläche 22 zur laminaren Strömungsumlenkung bildet. Zur Ausformung einer solchen Leitfläche 22 kann der untere Abschnitt der Schütztafel 15 aus einem der Schütztafel 15 vorgesetzten kreiszylindrischen Wandabschnitt 23 und einem daran tangential anschließenden, in Strömungsrichtung abfallenden Wandabschnitt 24 zusammengesetzt sein, der den unteren Rand der Schütztafel 15 untergreift, wie dies der Fig. 3 entnommen werden kann. Die sich zwischen der Schwelle 16 und der Leitfläche 22 ergebende Düsenform des Durchtritts 17 bedingt aufgrund des Venturieffekts nicht nur eine Verringerung der sonst auftretenden Strömungsverluste, sondern auch eine Steigerung der Anfangsgeschwindigkeit des Überwasserstrahls 13, was eine Erhöhung des wirksamen Ejektorimpulses nach sich zieht.

## Patentansprüche

1. Niederdruck-Wasserkraftwerk mit einer Ejektorrampe (12) für einen Überwasserstrahl (13), mit einem an eine Turbine (4) angeschlossenen Saugrohr (11) und mit einer Vereinigungsstrecke für den von der Ejektorrampe (12) abströmenden Überwasserstrahl (13) mit dem unterhalb des Überwasserstrahls (13) aus dem Saugrohr (11) ausströmenden Triebwasser (10), **dadurch gekennzeichnet, dass** die Vereinigungsstrecke eine Sohle (20) aufweist, die im Anschluss an den Austritt (18) des Saugrohrs (11) in Strömungsrichtung eine sich über die Sohlenbreite erstreckende Vertiefung (21) bildet.

2. Niederdruck-Wasserkraftwerk nach Anspruch 1, **dadurch gekennzeichnet, dass** der Ejektorrampe (12) ein der Höhe nach verstellbares, einen Durchtritt (17) für den Überwasserstrahl (13) freigebendes Schütz (14) vorgeordnet ist, dessen unterer den Durchtritt (17) begrenzender Abschnitt eine stetige Leitfläche (22) zur laminaren Strömungsumlenkung bildet.

3. Niederdruck-Wasserkraftwerk nach Anspruch 2, **dadurch gekennzeichnet, dass** der die stetige Leitfläche (22) bildende Abschnitt des Schützes (14) aus einem kreiszylindrischen Wandabschnitt (23) und einem davon in Strömungsrichtung tangential abfallenden Wandabschnitt (24) zusammengesetzt ist.

## Claims

1. Low-pressure hydroelectric power plant comprising an ejector ramp (12) for a surplus water jet (13), comprising a suction pipe (11) connected to a turbine (4) and comprising a combining section for the surplus water jet (13) flowing off from the ejector ramp (12) with the works water (10) flowing out of the suction pipe (11) underneath the surplus water jet (13), **characterised in that** the combining section has a bottom (20) which, following on from the outlet (18) of the suction pipe (11), forms in the flow direction a recess (21) extending over the width of the bottom.

2. Low-pressure hydroelectric power plant as claimed in claim 1, **characterised in that** the ejector ramp (12) has a gate (14) disposed upstream thereof which can be adjusted in height and opens a passage (17) for the surplus water jet (13) and of which the lower portion which delimits the passage (17) forms a continuous guide surface (22) for laminar flow deflection.

3. Low-pressure hydroelectric power plant as claimed in claim 2, **characterised in that** the portion of the gate (14) forming the continuous guide surface (22) is composed of a circular-cylindrical wall portion (23) and a wall portion (24) which descends tangentially therefrom in the flow direction.

## Revendications

1. Centrale hydroélectrique à basse pression avec une rampe d'éjection (12) pour un jet d'eau (13), avec un tuyau d'aspiration (11) relié à une turbine (4) et avec une voie de raccordement pour le jet d'eau (13) sortant de la rampe d'éjection (12), avec l'eau motrice (10) s'écoulant du tuyau d'aspiration (11) en dessous du jet d'eau (13), **caractérisée en ce que** la voie de raccordement comporte une semelle (20) qui, après la sortie (18) du tuyau d'aspiration (11), forme un renfoncement (21) s'étendant sur la largeur de la semelle dans le sens d'écoulement.

2. Centrale hydroélectrique à basse pression selon la revendication 1, **caractérisée en ce que** la rampe d'éjection (12) est précédée par un contacteur (14) réglable en hauteur, libérant un passage (17) pour le jet d'eau en excès (13), dont la partie inférieure délimitant le passage (17) forme une surface de guidage (22) continue pour la déviation d'écoulement laminaire.

3. Centrale hydroélectrique à basse pression selon la revendication 2, **caractérisée en ce que** la section, formant la face de guidage (22) continue, du contacteur (14) est composée d'une section de paroi (23) en forme de cylindre circulaire et d'une section de paroi (24) descendante tangentiellement dans la direction d'écoulement de celle-ci.
